(19)

Europäisches
Patentamt
European
Patent Office
Office européen
des brevets

(11) **EP 2 067 532 A1**

(12) **EUROPEAN PATENT APPLICATION**

(43) Date of publication:
 **10.06.2009 Bulletin 2009/24**

(51) Int Cl.:
 ***B05D 1/18*** *(2006.01)*  ***B05D 1/36*** *(2006.01)*

(21) Application number: **07023481.0**

(22) Date of filing: **04.12.2007**

(84) Designated Contracting States:
 **AT BE BG CH CY CZ DE DK EE ES FI FR GB GR HU IE IS IT LI LT LU LV MC MT NL PL PT RO SE SI SK TR**
 Designated Extension States:
 **AL BA HR MK RS**

(71) Applicant: **Sony Corporation**
 **Minato-ku**
 **Tokyo 108-0075 (JP)**

(72) Inventors:
 • **Krasteva, Nadejda**
  **70327 Stuttgart (DE)**
 • **Joseph, Yvonne**
  **70327 Stuttgart (DE)**

(74) Representative: **Appelt, Christian W.**
 **Forrester & Boehmert**
 **Pettenkoferstrasse 20-22**
 **80336 München (DE)**

(54)  **A method of producing a nanoparticle film on a substrate**

(57)  The invention relates to a method of producing a nanoparticle film on a substrate, to a sensor based on such nanoparticle film and to uses thereof. The invention furthermore relates to a method of enhancing the sensitivity and/or selectivity of a nanoparticle film based sensor. Furthermore, the present invention relates to a method of detecting an analyte or a mixture of analytes using said film or said sensor.

EP 2 067 532 A1

**Description**

The invention relates to a method of producing a nanoparticle film on a substrate, to a sensor based on such nanoparticle film and to uses thereof. The invention furthermore relates to a method of enhancing the sensitivity and/or selectivity of a nanoparticle film based sensor. Furthermore, the present invention relates to a method of detecting an analyte or a mixture of analytes using said film or said sensor.

Nanocomposite chemiresistor sensors for detection of analytes in fluid phase (e.g. gas and vapor) include an electrically conductive component that is allocated in a non-conductive medium. As conductive component metal nanoparticles (e.g. Au, Ag, Pt) may be used. The non-conductive component is typically an organic material and may comprise a polymer matrix in which the conductive particles are dispersed or functionalized organic molecules that serve either as capping ligands for the metal nanoparticles or to interlink the particles in a network. The operating principle of these sensors comprises measurement of the change in the film resistance caused by interaction between the analyte and the composite material. One potential application of such sensors is in the field of non-invasive medical diagnosis based on breath analysis, where trace amounts of disease biomarkers (e.g. biogenic thiols, disulfides, amines, alkanes, alkenes, ketones, acids, etc.) should be detected in presence of significant humidity and other metabolic products.

In some cases the analyte can be a volatile organic compound (VOC), e.g. belonging to one of the following classes - alcohols, ketones, aldehydes, esters, ethers, acids, bases, or inorganic solvents (e.g. water), which react reversibly with the sensitive material. In this case it is believed that the sensitivity of the chemiresistors to analyte depends on the ability of the composite material to undergo volumetric and/or permittivity change upon interaction with the analyte. The chemical selectivity of the chemiresistors depends on the presence of specific functionalities in the organic component of the nanocomposite material. Typically, the detection limit to VOC analytes of these chemiresistors lies in the few parts-per-million (ppm) concentration range.

On the other hand, biogenic gaseous or volatile analytes, like e.g. volatile sulphur-containing organic compounds (VSC), nitrogen-containing organic compounds, or gases such as ammonia, nitric oxides, or carbon oxide, can also be detected by using organic/inorganic nanocomposite chemiresistive sensors. In most cases the interaction between these analytes and the sensitive material is fairly irreversible, as it is apparently based on the binding of the analyte to the surface of the conductive particle. Thus, the sensitivity and the selectivity of the sensor to these analytes depend on the chemical nature of the conductive particles and on the strength of the chemical interaction between the particle and the organic medium surrounding the particles.

Several studies have been carried out on improving the sensitivity and the chemical selectivity of inorganic/organic composite chemiresistors via modification of the composition of the sensitive layer and/or the strength of interaction between the conductive and the non-conductive film components.

EP1215485 describes a method for preparation of highly selective nanoparticle/organic interlinked sensors via introducing selectivity enhancing units in the linker molecules. Introducing additional fine tuning unit in a close proximity of the selectivity-enhancing functionality can achieve a fine-tuning of the selectivity.

WO9927357 describes a sensor based on films of thiol-encapsulated Au-nanoparticles where the selectivity of the sensor is tailored by introducing functionality to the ligand shell thereby providing active sites for sorption of target analytes.

US 6773926 describes the use of chemiresistors comprising ligand-caped metal nanoparticles for detection of thiols in the gaseous phase. The sensing mechanism is based on a displacement of the particle-capping ligands by analyte molecules. This process requires formation of a chemical bond between the analyte and the surface of the metal particle. Thus, the sensitivity of the sensor to thiols is governed by (i) the strength of the chemical bond between the capping ligand and the particle or (ii) by the surface coverage of the particles by ligands.

US 6841391 describes the use of an artificial olfaction device based on an array of ligand-caped metal nanoparticles for detection of various medical conditions, including halitosis, periodontal disease or bacterial infections. A sufficient sensitivity and selectivity of the sensors to disease biomarker in presence of breath humidity is ensured by introducing a separate absorbent unit which serves to remove water and to concentrate the biomarker until a detectable concentration in the mixture was achieved.

Most of the above attempts to enhance the sensitivity or the selectivity of nanoparticle film based sensors are based on the introduction of selectivity/sensitivity enhancing components into the nanoparticle film, or have focused on the design of new organic materials with desired chemical composition and functionality. However all of these approaches require extensive and complicated chemical synthetic work. Moreover, not all new materials may be applicable for the fabrication of nanoparticle films/nanocomposite material with sufficient stability and constant long-term performance.

Consequently, it was an object of the present invention to provide for new ways of improving sensitivity and selectivity of nanoparticle film based sensors. It was also an object of the present invention to provide for a simple and fast method for tailoring the sensitivity and selectivity of nanoparticle film based sensors, such as chemiresistors.

It was furthermore an object of the present invention to provide for a method of enhancing the selectivity and sensitivity of nanoparticle film based sensors, which does not rely on extensive chemical synthesis of new compounds or material.

The objects of the present invention are solved by a method of producing a nanoparticle film on a surface of a substrate, said film comprising nanoparticles distributed on said surface, said nanoparticles being at least partially embedded in or at least partially surrounded by an electrically non-conducting medium also present on said surface, such as a polymer matrix or organic linker molecules or organic capping ligands, said method comprising the steps:

- providing a substrate having a surface,
- applying a nanoparticle film on said surface of said substrate, preferably by a process selected from layer-by-layer self assembly, spraying, screen printing, stamping, doctor blading and Langmuir-Blodgett techniques,
- deliberately introducing structural inhomogeneities or discontinuities into said film by
- applying said film on said surface of said substrate at an average film thickness ≤45nm, preferably ≤ 10nm, or
- applying said film on a patterned surface of said substrate, said patterned surface having a pattern which introduces structural inhomogeneities or discontinuities into said film.

In one embodiment said film is applied by layer-by-layer self assembly at an average film thickness ≤ 45nm, preferably ≤ 10 nm.

The objects of the present invention are also solved by a method of producing a nanoparticle film on a surface of a substrate, in particular according to the present invention, said film comprising nanoparticles distributed on said surface, said nanoparticles being at least partially embedded in or at least partially surrounded by an electrically non-conducting medium also present on said surface, such as a polymer matrix or organic linker molecules or organic capping ligands, said method comprising the steps:

- providing, in any order, a substrate having a surface, a dispersion of nanoparticles and a composition comprising an electrically non-conducting medium or being capable of producing an electrically non-conducting medium,
- a process of alternately immersing said substrate in said dispersion of nanoparticles and in said composition, thereby producing a nanoparticle film on
- said substrate.

Preferably, said process of alternately immersing said substrate in said dispersion of nanoparticles and said composition is performed such that said film resulting therefrom has an average thickness ≤ 45nm, preferably ≤ 10 nm.

In one embodiment said film resulting therefrom has an average thickness ≤ 41.5 nm, preferably ≤ 13 nm, more preferably ≤ 10 nm.

In one embodiment said process of alternately immersing is performed n times, n being an integer ≤ 15, preferably ≤ 10, more preferably ≤ 5.

In one embodiment said substrate additionally has an electrode structure on said surface, and said film is applied such that it touches said electrode structure, said nanoparticle film on said surface of said substrate thus being able to act as a nanoparticle film based sensor.

The objects of the present invention are also solved by a method of enhancing sensitivity and/or selectivity of a nanoparticle film based sensor for an analyte, said nanoparticle film based sensor comprising a substrate having a surface with an electrode structure thereon and nanoparticles distributed on said surface, said nanoparticles being at least partially embedded in or at least partially surrounded by an electrically non-conducting medium also present on said surface, such as a polymer matrix or organic linker molecules or organic capping ligands, said nanoparticle film based sensor being obtainable by a process of alternately immersing said substrate in a composition comprising said electrically non-conducting medium or being capable of producing said electrically non-conducting medium, and in a dispersion of nanoparticles, and by performing said process for a defined number of times n, n being an integer from 1 to 50, said method comprising the steps:

- producing a plurality of nanoparticle film based sensors as defined above by said process of alternately immersing said substrate in said composition and in said dispersion,
- performing said process of alternately immersing said substrate in said composition and in said dispersion for each sensor for n times, with n being an integer from 1 to 50 and n being different for each sensor, such that said nanoparticle film based sensors differ from each other by the number of times n, for which said process is performed during the production of each sensor,
- providing an analyte or a mixture of analytes to be detected,
- exposing each of said sensors to the same defined concentration of said analyte or of said mixture,
- measuring a response of each of said sensors to said same defined concentration of said analyte or said mixture and comparing the responses of said sensors,
- identifying from said plurality of sensors a most sensitive and/or a most selective sensor for said analyte or said mixture, based on the amplitude or the sign of said measured response.

Preferably, the method comprises at least one of the following further steps:

- characterizing each sensor, including said most sensitive and/or said most selective sensor by the number of times n for which said process of alternately immersing is performed during the production of each sensor, or
- characterizing each sensor by the average thickness of its respective nanoparticle film, or
- characterizing each sensor by the Ohmic resistance of its respective nanoparticle film.

In one embodiment n is an integer from 1-20, preferably from 1-15, more preferably from 1-10, even more preferably from 1-5.

In one embodiment said organic linker molecules enable the binding of said linker molecules to said nanoparticles, thus forming interlinked nanoparticles.

In one embodiment said organic linker molecules enable the binding of said linker molecules to said nanoparticles and to said substrate.

In one embodiment said organic linker molecules are bifunctional or polyfunctional molecules.

In one embodiment said nanoparticles are metal nanoparticles.

The objects of the present invention are also solved by a nanoparticle film produced by the method according to the present invention and having deliberately introduced structural inhomogeneities or discontinuities in said nanoparticle film.

The objects of the present invention are also solved by a nanoparticle film based sensor produced by the method according to the present invention and having deliberately introduced structural inhomogeneities or discontinuities in its nanoparticle film.

The objects of the present invention are also solved by a nanoparticle film based sensor produced or identified by the method according to the present invention.

The objects of the present invention are also solved by the use of a film according to the present invention for detecting an analyte or a mixture of analytes, by

- exposing said film to a medium suspected of containing an analyte or a mixture of analytes,
- measuring a response of said film to said analyte or mixture of analytes, if present in said medium, by means of an electrode structure in contact with said film,
- detecting the presence or absence of said analyte or mixture of said analytes, based on said measured response.

The objects of the present invention are also solved by a method of detecting an analyte or a mixture of analytes, said method comprising:

- providing a sensor according to the present invention,
- exposing said sensor to a medium suspected of containing an analyte or a mixture of analytes,
- measuring a response of said sensor to said analyte or mixture of analytes, if present in said medium,
- detecting the presence or absence of said analyte or mixture of analytes, based on said measured response.

As used herein, the term "film" refers to a layer of material, which layer does not necessarily have to be continuous. In other words, such a film may show discontinuities in its structure and still be referred to as a "film". The term "structural inhomogeneities or discontinuities" in a film refers to a scenario wherein, in such a film there are spatially separated clusters of nanoparticles or single nanoparticles which may be connected with or by junctions of an organic matrix or organic linker molecules. In terms of any electron transport through said film showing such structural inhomogeneities or discontinuities, the electron transport within the aforementioned clusters of nanoparticles is not restricted to any dimension, and therefore these clusters are also sometimes referred to as "3D clusters" or "3 dimensional clusters" whereas the junctions between such clusters are herein sometimes referred to as "2D" or "1D" ("two dimensional" or "one dimensional") indicating that the electron transport is dimensionally restricted in these junctions. The aforementioned "structural inhomogeneities or discontinuities" are herein also sometimes referred to as "lateral inhomogeneities or discontinuities", meaning that they exist within the main plane of said film.

A "nanoparticle film based sensor", as used herein, is a sensor for detecting chemicals, preferably a chemiresistor, wherein the sensitive element of the sensor is a nanoparticle film. In a preferred embodiment, the conductivity of this nanoparticle film changes in the presence of a chemical agent to be detected. Preferably, the nanoparticle film is a film of metal nanoparticles.

If such a film having structural inhomogeneities or discontinuities herein described in terms of its "average film thickness", this is usually meant to refer to the average height of the film at positions without discontinuities over a defined area, preferably over an area of at least 40 2 $\mu m^2$.

The term "layer-by-layer self-assembly", as used herein, is meant to refer to a process wherein a substrate is alternately immersed into a dispersion of nanoparticles and a composition comprising an electrically non-conducting medium (by which the nanoparticles within the film are to be at least partially surrounded by or embedded in) or into a composition being capable of producing the electrically non-conducting medium. The electrically non-conducting medium may be a polymeric matrix, or a network of organic linker molecules or organic capping ligands which provide for a linkage of the nanoparticles amongst each other and/or to the substrate.

As used herein, a "composition comprising said electrically non-conducting medium" is meant to refer to a composition which comprises a polymer or other organic compound in solution or dispersion from which the non-conducting medium on the substrate will be formed. If such a composition is "capable of producing said electrically non-conducting medium", this may also refer to a solution or dispersion of reactants, such as monomers or linker precursor molecules, which may react with each other to produce a polymer or an organic linker for said electrically non-conducting medium.

The term "nanoparticle", as used herein, is meant to refer to particles the average dimensions of which are < 1 $\mu$m, preferably $\leq$ 500 nm, more preferably $\leq$ 300 nm, even more preferably $\leq$ 100 nm, yet more preferably $\leq$ 10 nm and most preferably $\leq$ 5 nm.

The term "bifunctional linker", or "polyfunctional linker", or "organic linker" as used herein, is meant to refer to a linker molecule in which there are at least two independent sites that enable the binding of said linker to nanoparticles and/or to the substrate. "Functionality", in this sense, therefore refers to the capability of binding two nanoparticles. By such a bifunctional or polyfunctional linker, it is therefore possible to create a network of nanoparticles which are, at least partially, interlinked. Such "organic linkers" may comprise amine-, thiol-, mercaptoamide-, dithiocarbamate- or disulfide-terminated single chain organic molecules, dendritic or hyperbranched oligomers or polymers. A person skilled in the art knows how to perform "layer-by-layer self-assembly" which has for example been described in some detail in EP 1 215 485. The nanoparticle used in the present invention are preferably metal nanoparticles. Preferred materials form nanoparticles are Au, Ag, Pt, Pd, Cu, Co, Ni, Cr, Mn, and Fe. It is also possible to use nanoparticles comprising combinations, e.g. alloys of these metals, or core/shell particles. It is also possible to use mixtures of two or more kinds of metal nanoparticles.

Sometimes in this application reference is made to an "organic matrix" into which conductive nanoparticles may be embedded. Such "organic matrix" is one embodiment of the aforementioned electrically non-conducting medium. Preferably, the organic matrix is a polymeric matrix, meaning that it is made of a polymer or a mixture of polymers. Such polymers may be insulating or semiconducting polymers.

The substrate in accordance with the present invention may be any plane substrate having a suitable surface, such as glass, plastic, ceramic or silicone. Preferably on such substrate, electrode structures are fabricated via lithographic, printing or stamping techniques. If such electrode structures are on said substrate, the nanoparticle film is applied to the surface of said substrate such that it comes into contact with said electrode structure.

The person skilled in the art knows appropriate combinations of organic linker molecules and metal nanoparticles. Suitable combinations have for example been disclosed in EP 1 215 485 or WO 99/27357. Furthermore, the person skilled in the art knows of appropriate combinations of metal nanoparticles and organic capping ligands which have for example been described in US 6773926 and US 6841391.

Sometimes in this application, reference is made to a "conductive nanocomposite material" which is used synonymously herein with a "nanoparticle film in which the nanoparticles are at least partially embedded in or at least partially surrounded by an electrically non-conducting medium".

The present inventors have surprisingly found that it is possible to tune sensitivity and selectivity of a nanoparticle film based sensor merely by modifying the structure of the nanoparticle film and by deliberately introducing structural inhomogeneities or discontinuities into said film. As an example, the inventors found that the sensitivity of a nanoparticle film based sensor to volatile sulfur- containing analytes (VSC) very much depends on the lateral homogeneity and continuity of the nanoparticle film. Very thin discontinuous films (i.e. films having an average thickness $\leq$ 10 nm) which are operated closed to the conduction percolation threshold show limits of detection for VSC below 20 ppb. As used herein, the term "conduction percolation threshold" is meant to refer to a scenario, wherein the electrical conduction behavior of a nanoparticle film is limited and restricted due to the fact that the conduction pathway contains cluster-to-cluster contacts with larger distances which are bottleneck junctions for charge transport due to either their coulomb blockade behavior or to the size of junctions in combination with the large separations between the particles within the junctions. Without wishing to be bound by any theory, the present inventors believe that dosing the sensor with analytes or a mixture with analytes induces structural rearrangement in the junctions or a volumetric change in the material and and thus a change (decrease or increase) in the ohmic resistance can be observed.

The inventors have surprisingly found that by deliberately introducing such structural inhomogeneities or discontinuities into a nanoparticle film, the sensitivity and selectivity of this film can be tuned depending on the analyte or the mixture of analytes to be detected. In a preferred embodiment, the introduction of such structural inhomogeneities or discontinuities is achieved by making the nanoparticle film very thin, typically ≤ 20 nm, more preferably ≤ 10 nm, more preferably by a layer-by-layer self assembly.

The present invention provides for nanoparticle film based sensors for highly sensitive detection of trace amounts of analytes, for examples volatile sulphur compounds which may be used as biomarkers for certain diseases, such as diseases of the gastrointestinal tract, halitosis, and dental diseases. Moreover, in accordance with the present invention, the selectivity of a nanoparticle film based sensor can be tuned to individual analytes or mixtures of analytes. Furthermore, the present invention avoids the need for extensive chemical synthesis work and allows for a tuning of sensitivity and selectivity merely by controlling the structure of the nanoparticle film in term of its homogeneity or inhomogeneity. Furthermore, the present invention allows to make a plurality of compositionally equal, yet structurally different sensors, i.e. having different amounts of inhomogeneities incorporated, with enhanced sensitivity and tunable selectivity, which different sensors may therefore also be combined in sensor arrays. Such sensor arrays which have number of sensors in accordance with the present invention, may therefore be used for the detection of a plurality of analytes or a mixture of analytes.

A preferred embodiment is described as follows:

The chemical sensor proposed here comprises a few nanometer (typically < 50 nm, preferably ≤ 10 nm) thin layer of conductive nanocomposite material deposited on a substrate that possesses electrode structures to address the composite material. The interaction of the conductive composite material with analyte molecules present in the fluid phase leads to a change in the resistance of the conductive material. The measured sensor signal is the normalized change of resistance $\Delta R / R_{ini} = (R_t - R_{ini}) / R_{ini}$, where $R_{ini}$ is the sensor resistance before exposure to analyte, and $R_t$ is the sensor resistance at time t after the start of the analyte exposure. In this sense the chemical sensor proposed here is a chemiresistor.

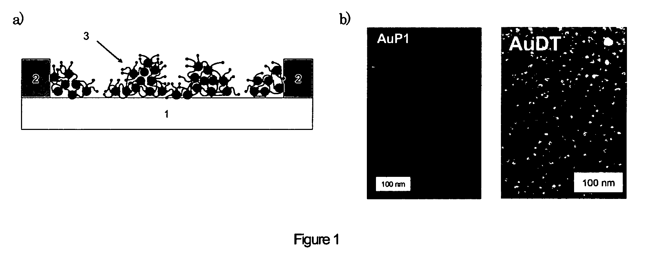

A schematical drawing of the chemiresistor is shown in Figure 1. The substrate (1) may be glass, plastic, ceramic or silicon substrate, on which electrode structures (2) are fabricated via lithographic, printing or stamping technique. The nanocomposite material (3) comprises conductive nanoparticles that may be embedded in an organic matrix, or capped with organic ligand molecules, or interlinked with bi- or polyfunctional organic molecules. The conductive nanoparticles may comprise metal nanoparticles (like gold, platinum, silver, metal alloy or ferrite nanoparticles). The organic matrix may comprise insulating or semi conducting polymers. The linker molecules may comprise amine-, thiol- , mercaptoamide-, dithiocarbamate- or disulfide- terminated single chain organic molecules, dendritic or hyperbranched oligomers or polymers. For detection of thiols, the linker molecules should possess linking terminal groups which form weaker bond with the metal particle than the corresponding metal-thiol bond. The nanocomposite layer may be deposited via self-assembly from solutions, spraying, screen printing, stamping or other techniques.

Important characteristic of the sensitive layer is the lateral inhomogeneity and discontinuity of its structure (Fig. 1a). The nanocomposite layer comprises spatially separated nanosized 3D clusters, which may be connected with lower dimensionality junctions (2D or 1D) of the same composite material. Scanning electron micrographs (SEM) of such films are shown in Figure 1b. Typically, the 3D clusters are irregularly distributed on the substrate surface and the number and the length of the junctions varies. Ideally, the clusters can be distributed regularly on the surface and the junctions can have equal length and space dimensionality. This structure extends into the micrometer range so that the area between the electrodes is entirely covered by nanocomposite film.

The film discontinuity increases when e.g. the thickness of the composite layer decreases; thus the discontinuity of the film structure can be controlled in this way. Alternatively, the film discontinuity can be controlled by assembling the nanocomposite film on surface patterned substrates, or using printing or stamping techniques for depositing the nanocomposite conductive layer in a desired structural pattern. For example it is possible to pattern a substrate surface such that it possesses areas where nanoparticles bind preferentially, for example using amino-silane as adhesion layer, and other areas where nanoparticles do not bind, e.g. using methyl-silane as adhesion layer. Such an approach will create regularly distributed conductive nanoparticle clusters which will be separated by lines/areas in which nanoparticles will not be present. The latter lines/areas may act as conductance regulating low-dimensional junctions.

Upon dosing with analyte, the analyte molecules diffuse into the 3D clusters and interact with the 2D/1D junctions. By this process, either the structure of the junctions or the spatial separation between the clusters, or both may change. This will result in a change in the resistance of the sensitive layer.

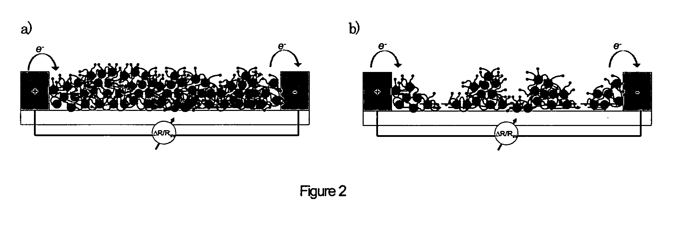

The charge transport and thus the resistance of the film are determined mainly by the separation between the conductive nanoparticles along the conduction pathways in the film. For structurally homogeneous films conduction pathways with different interparticle separation are regularly distributed across the film thickness, as schematically depicted in Fig. 2a. In this case the structural and thus the resistance change caused by the analyte will be averaged over all conduction pathways.

For structurally inhomogeneous films the conductive pathways run through regions with different dimensionality (Fig. 2b). It is to be expected that the contribution of the lower dimensionality junctions to the film resistance would be stronger than the contribution of the 3D regions. This is confirmed by comparing the resistances of films with different thickness and thus different lateral homogeneity (see e.g. Table 1).

Analyte induced structural changes in a discontinuous film (e.g. resulting from reversible swelling or from irreversible particle reorganization) are expected to be much stronger compared to that in a bulk homogeneous film due to the increased contribution of the low dimensionality junctions to the film resistance. Thus, the chemiresistor response to analytes is expected to be much stronger in the case of a discontinuous sensitive layer.

Furthermore, reference is made to the figures, wherein

figure 1 a) shows a schematic cross section representation of a nanoparticle film based sensor, in particular a nanoparticle film based chemiresistor comprising an inhomogeneous, i.e. laterally discontinuous sensitive nanoparticle film, and 1b) shows representative scanning electron micrograph images of discontinuous nanocomposite films,

figure 2 shows a schematic representation of conduction pathways in a) laterally homogeneous and continuous and b) laterally discontinuous nanocomposite film,

figure 3 shows responses of AuP1 chemiresistors to dosing with a) 100 ppb $CH_3SH$ and b) 40 ppb $H_2S$ at room temperature,

figure 4 shows a response/resistance correlation for AuP1 sensors dosed with 20 ppb $CH_3SH$ room temperature,

and figure 5 shows responses of AuDT chemiresistors with different thicknesses to solvent vapours with concentration 5000 ppm; the variation in the thickness was achieved by varying the deposition numbers cycles during the film preparation; the corresponding number of cycles is indicated by each sensor transient on the graphs.

Moreover reference is made to the following examples which are given to illustrate, not to limit the present invention.

## Examples

The approach in the present invention is demonstrated by the following experimental findings. The examples given below illustrate the possibility of affecting both the magnitude (i.e. affecting sensitivity) and the direction (i.e. affecting selectivity) of chemiresistor response to analyte by modifying the degree of discontinuity of the nanocomposite layer. The experimental results are obtained using chemiresistor sensors that comprise gold nanoparticles (AuNP) interlinked with first generation poly (propylene imine) dendrimer molecules (P1) or with dodecane-dithiol molecules (DT). These chemiresistors are hereafter referred to as AuP1 and AuDT, respectively.

A) Deposition of the conductive composite material

The preparation of the sensors was done via layer-by-layer self-assembly as previously described in EP1215485. Glass substrates equipped with interdigitated electrode structures (50 finger pairs, 20 μm pitch, 1800 μm overlap, 100 nm finger height). The thickness and the structural discontinuity of the film were controlled by performing different number of assembly cycles.

B) Vapor sensitivity measurements

The responses of the chemiresistors were measured as described in EP1215485. AuP1 chemiresistors were dosed with methane thiol ($CH_3SH$) and hydrogen sulfide ($H_2S$) with concentrations between 20 and 500 ppb, generated using a commercial permeation setup (AeroLaser GmbH, Garmisch-Partenkirchen). AuDT chemiresistors were dosed with vapors of toluene, 4-methyl-2-pentanone, 1-propanol and water with concentrations between 400 and 5000 ppm, generated by using a commercial gas-mixing equipment (MCZ Umwelttechnik, Obermörlen)

C) Results

**Example 1: Sensitivity enhancement → AuP1 sensors dosed with VSC**

Table 1 summarizes the deposition conditions and typical thickness and resistance values of AuP1 sensors prepared as indicated above. Upon decreasing the number of assembly cycles both thickness and conductance (= reciprocal resistance) of the nanoparticle layer decrease. This implies an increased discontinuity in the lateral film structure, which was also confirmed by SEM measurement.

| Number of layer-by-layer deposition cycles performed | Film thickness*) nm | Film resistance, kOhm |
|---|---|---|
| 2 | < 5 | > 10000 |
| 3 | 5 +/- 3 | 1622 +/- 833 |
| 4 | 10 +/- 3 | 13.4 +/- 0.2 |
| 7 | 19 +/- 2 | 1.0 +/- 0.3 |
| 10 | 22 +/- 2 | 0.5 +/- 0.2 |
| *) thickness in case of discontinuous films is defined as the average height of the 3D clusters estimated from a film- covered area of at least 40 $\mu m^2$ | | |

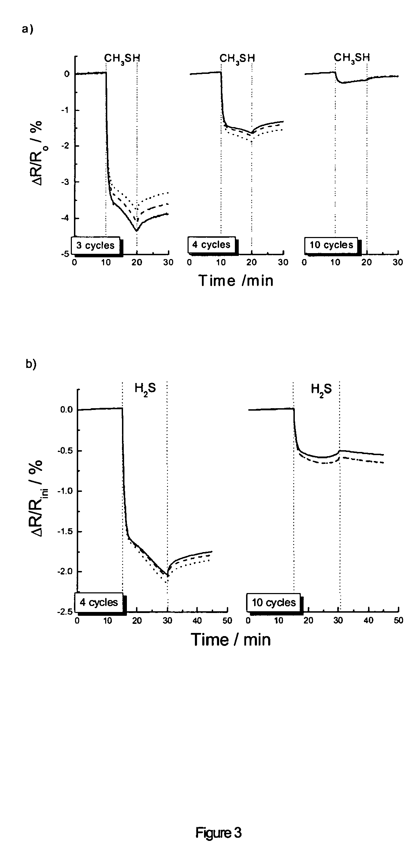

Figure 3 shows typical response transients of AuP 1 chemiresistors to 100 ppb $CH_3SH$ and to 40 ppb $H_2S$. With decreasing the nanocomposite layer thickness (i.e. increasing the lateral discontinuity of the film) the magnitude of the sensor response increases. An enhancement in sensitivity to $CH_3SH$ of about 30 times and to $H_2S$ of about 4 times was achieved upon decreasing the assembly cycle number.

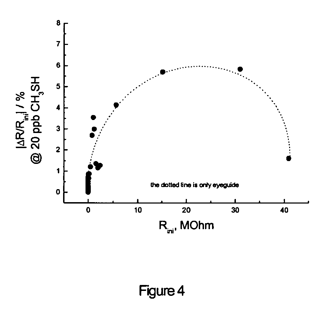

Figure 4 shows an experimentally obtained correlation between the initial film resistance $R_{ini}$ and the sensor responses to 20 ppb $CH_3SH$. There is an optimum range of $R_{ini}$ values between ~ 5 kOhm and ~ 5 MOhm, where high sensitivity to VSC is obtained with a good signal/noise ratio.

In this example, the increased sensitivity of the chemiresistors to VSC could be ascribed to the rearrangement of metal nanoparticles in the low dimensionality junctions in the discontinuous films resulting from the irreversible binding of VSCs to the particle surface and the exchange of the P1 linker with the VSC molecules.

### Example 2: Selectivity tuning → AuDT sensors dosed with VOCs and water vapors

Table 2 summarizes the deposition conditions and typical thickness and resistance values of AuDT sensors prepared as indicated above. Here again both thickness and conductance (= reciprocal resistance) of the nanoparticle layer decrease upon decreasing the number of assembly cycles.

*Table 2. Thickness and resistance variation of AuDT sensors*

| Number of layer-by-layer deposition cycles performed | Film thickness*), nm | Film resistance, kOhm |
|---|---|---|
| 4 | 10.8 | ~ 14 000 |
| 5 | 11.9 | ~ 107 |
| 8 | 20.5 | ~43 |
| 14 | 40.5 | ~ 17 |
| *) thickness in case of discontinuous films is defined as the average height of the 3D clusters estimated from a film- covered area of at least 40 $\mu m^2$ | | |

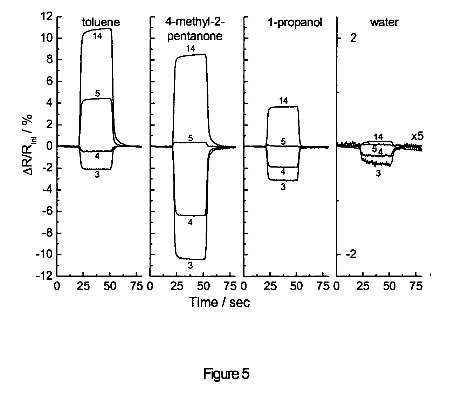

Figure 5 represents typical response traces of AuDT chemiresistors with variable thickness to dosing with solvent vapors. The direction of chemiresistor responses changes from positive (increase in resistance) to negative (decrease in resistance) upon decreasing the film thickness, i.e. increasing the film discontinuity.

In this example, the response of the chemiresistors to VOCs is caused by the interplay between swelling and dielectric permittivity change in the film resulting from the reversible sorption of VOCs. In the case of thick laterally continuous films swelling, especially in direction normal to the film plane, has dominating influence on the sensor resistance, and positive sensor responses (i.e. increase in resistance) are measured upon dosing with VOCs. Upon decreasing the film thickness, a laterally discontinuous structure is formed, where possible swelling within the isolated 3D clusters would not determine the film resistance and the sensor signal anymore. The response of the sensor to VOCs would become negative (i.e. decrease in resistance) due to the increased dielectric permittivity of the medium surrounding the nanoparticles. In this way, it would be possible to vary the thickness of the sensor film, and possibly to use an array of sensors with different thicknesses, in order to obtain information about the permittivity of the analyte. Furthermore, it would be possible to build an array of sensors based on compositionally same material, but having distinct response pattern (i.e. different selectivity) to analytes by only varying the degree of lateral discontinuity of the sensitive layer.

The features of the present invention disclosed in the specification, the claims and/or in the accompanying drawings, may, both separately, and in any combination thereof, be material for realising the invention in various forms thereof.

**Claims**

1. A method of producing a nanoparticle film on a surface of a substrate, said film comprising nanoparticles distributed on said surface, said nanoparticles being at least partially embedded in or at least partially surrounded by an electrically non-conducting medium also present on said surface, such as a polymer matrix or organic linker molecules or organic capping ligands, said method comprising the steps:

   - providing a substrate having a surface,
   - applying a nanoparticle film on said surface of said substrate, preferably by a process selected from layer-by-layer self assembly, spraying, screen printing, stamping, doctor blading and Langmuir-Blodgett techniques,
   - deliberately introducing structural inhomogeneities or discontinuities into said film by

      - applying said film on said surface of said substrate at an average film thickness $\leq$45nm, preferably $\leq$10nm, or
      - applying said film on a patterned surface of said substrate, said patterned surface having a pattern which introduces structural inhomogeneities or discontinuities into said film.

2. The method according to claim 1, wherein said film is applied by layer-by-layer self assembly at an average film thickness $\leq$45nm, preferably $\leq$10 nm.

3. A method of producing a nanoparticle film on a surface of a substrate, in particular according to any of the foregoing claims, said film comprising nanoparticles distributed on said surface, said nanoparticles being at least partially embedded in or at least partially surrounded by an electrically non-conducting medium also present on said surface, such as a polymer matrix or organic linker molecules or organic capping ligands, said method comprising the steps:

   - providing, in any order, a substrate having a surface, a dispersion of nanoparticles and a composition comprising an electrically non-conducting medium or being capable of producing an electrically non-conducting medium,
   - a process of alternately immersing said substrate in said dispersion of nanoparticles and in said composition, thereby producing a nanoparticle film on
   - said substrate.

4. The method according to claim 3, wherein said process of alternately immersing said substrate in said dispersion of nanoparticles and said composition is performed such that said film resulting therefrom has an average thickness $\leq$ 45nm, preferably $\leq$ 10 nm.

5. The method according to claim 4, wherein said film resulting therefrom has an average thickness $\leq$ 41.5 nm, preferably $\leq$ 13 nm, more preferably $\leq$ 10 nm.

6. The method according to any of claims 3-5, wherein said process of alternately immersing is performed n times, n being an integer $\leq$ 15, preferably $\leq$ 10, more preferably $\leq$ 5.

7. The method of any of claims 1-6, wherein said substrate additionally has an electrode structure on said surface, and wherein said film is applied such that it touches said electrode structure, said nanoparticle film on said surface of said substrate thus being able to act as a nanoparticle film based sensor.

8. A method of enhancing sensitivity and/or selectivity of a nanoparticle film based sensor for an analyte, said nanoparticle film based sensor comprising a substrate having a surface with an electrode structure thereon and nanoparticles distributed on said surface, said nanoparticles being at least partially embedded in or at least partially surrounded by an electrically non-conducting medium also present on said surface, such as a polymer matrix or organic linker molecules or organic capping ligands, said nanoparticle film based sensor being obtainable by a process of alternately immersing said substrate in a composition comprising said electrically non-conducting medium or being capable of producing said electrically non-conducting medium, and in a dispersion of nanoparticles, and by performing said process for a defined number of times n, n being an integer from 1 to 50, said method comprising the steps:

- producing a plurality of nanoparticle film based sensors as defined above by said process of alternately immersing said substrate in said composition and in said dispersion,
- performing said process of alternately immersing said substrate in said composition and in said dispersion for each sensor for n times, with n being an integer from 1 to 50 and n being different for each sensor, such that said nanoparticle film based sensors differ from each other by the number of times n, for which said process is performed during the production of each sensor,
- providing an analyte or a mixture of analytes to be detected,
- exposing each of said sensors to the same defined concentration of said analyte or of said mixture,
- measuring a response of each of said sensors to said same defined concentration of said analyte or said mixture and comparing the responses of said sensors,
- identifying from said plurality of sensors a most sensitive and/or a most selective sensor for said analyte or said mixture, based on the amplitude or the sign of said measured response.

9. The method according to claim 8, comprising at least one of the following further steps:

- characterizing each sensor, including said most sensitive and/or said most selective sensor by the number of times n for which said process of alternately immersing is performed during the production of each sensor, or
- characterizing each sensor by the average thickness of its respective nanoparticle film, or
- characterizing each sensor by the Ohmic resistance of its respective nanoparticle film.

10. The method according to any of claims 8-9, wherein n is an integer from 1-20, preferably from 1-15, more preferably from 1-10, even more preferably from 1-5.

11. The method according to any of the foregoing claims, wherein said organic linker molecules enable the binding of said linker molecules to said nanoparticles, thus forming interlinked nanoparticles.

12. The method according to any of claims 1-10, wherein said organic linker molecules enable the binding of said linker molecules to said nanoparticles and to said substrate.

13. The method according to any of claims 11-12, wherein said organic linker molecules are bifunctional or polyfunctional molecules.

14. The method according to any of the foregoing claims, wherein said nanoparticles are metal nanoparticles.

15. A nanoparticle film produced by the method according to any of claims 1-6 and having deliberately introduced structural inhomogeneities or discontinuities in said nanoparticle film.

16. A nanoparticle film based sensor produced by the method according to claim 7 and having deliberately introduced structural inhomogeneities or discontinuities in its nanoparticle film.

17. A nanoparticle film based sensor produced or identified by the method according to any of claims 8-10.

18. Use of a film according to claim 15 for detecting an analyte or a mixture of analytes, by

- exposing said film to a medium suspected of containing an analyte or a mixture of analytes,
- measuring a response of said film to said analyte or mixture of analytes, if present in said medium, by means of an electrode structure in contact with said film,
- detecting the presence or absence of said analyte or mixture of said analytes, based on said measured response.

19. A method of detecting an analyte or a mixture of analytes, said method comprising:

- providing a sensor according to claim 16 or 17,
- exposing said sensor to a medium suspected of containing an analyte or a mixture of analytes,
- measuring a response of said sensor to said analyte or mixture of analytes, if present in said medium,
- detecting the presence or absence of said analyte or mixture of analytes, based on said measured response.

a)

b)

Figure 1

a)

b)

Figure 2

a)

b)

Figure 3

Figure 4

Figure 5

EP 2 067 532 A1

**Europäisches Patentamt**
**European Patent Office**
**Office européen des brevets**

## EUROPEAN SEARCH REPORT

Application Number

EP 07 02 3481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 215 485 A (SONY INT EUROP GMBH [DE]) 19 June 2002 (2002-06-19) * paragraphs [0016], [0105], [0106] * ----- | 1-7,15 | INV. B05D1/18 B05D1/36 |
| X | EP 1 790 977 A (SONY DEUTSCHLAND GMBH [DE]) 30 May 2007 (2007-05-30) * paragraphs [0015], [0044], [0068], [0071], [0072]; table 2 * ----- | 1-7,15 | |

TECHNICAL FIELDS SEARCHED (IPC)

B05D

~~The present search report has been drawn up for all claims~~

| Place of search | Date of completion of the search | Examiner |
|---|---|---|
| The Hague | 15 May 2008 | Slembrouck, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 07 02 3481

The Search Division considers that the present European patentapplication does not comply with the requirements of unity of invention and relates to severalinventions or groups of inventions, namely:

1. claims: 1-7, 15

       a method of producing a nanoparticle film on a surface of a substrate; nanoparticle film produced by said method.

          ---

2. claims: 8-14, 16-19

       nanoparticle film based sensor; method for enhancing sensitivity and/or selectivity of a nanoparticle film based sensor; use of a nanoparticle film for detecting an analyte; method of detecting an analyte using a nanoparticle film based sensor.

          ---

**ANNEX TO THE EUROPEAN SEARCH REPORT
ON EUROPEAN PATENT APPLICATION NO.**

EP 07 02 3481

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2008

| Patent document cited in search report | | Publication date | Patent family member(s) | | Publication date |
|---|---|---|---|---|---|
| EP 1215485 | A | 19-06-2002 | AU | 781166 B2 | 12-05-2005 |
| | | | AU | 9708301 A | 13-06-2002 |
| | | | CN | 1359002 A | 17-07-2002 |
| | | | JP | 4097181 B2 | 11-06-2008 |
| | | | JP | 2002228616 A | 14-08-2002 |
| | | | KR | 20020046960 A | 21-06-2002 |
| | | | US | 2002132361 A1 | 19-09-2002 |
| EP 1790977 | A | 30-05-2007 | JP | 2007192805 A | 02-08-2007 |
| | | | US | 2007114138 A1 | 24-05-2007 |

EPO FORM P0459

For more details about this annex : see Official Journal of the European Patent Office, No. 12/82

**EP 2 067 532 A1**

**Patent documents cited in the description**

- EP 1215485 A
- WO 9927357 A
- US 6773926 B
- US 6841391 B